# DEMANDE DE BREVET EUROPEEN

(11) **EP 1 324 074 A1**
(43) Date de publication de la demande: **02.07.2003**
(21) Numéro de dépôt: 02293143.0
(22) Date de dépôt: 18.12.2002
(51) Int. Cl.: G01T 1/24

(54) **Système de détection spectrométrique intégré à semi-conducteur**

(30) Priorité: 20.12.2001 FR 0116550
(71) Demandeur: Commissariat A L'Energie Atomique, 75752 Paris 15ème (FR)
(72) Inventeur: Verger, Loîck, 38000 Grenoble (FR); Rustique, Jacques, 38170 Seyssinet (FR); Rostaing, Jean-Pierre, 38470 Vinay (FR); Ouvrier-Buffet, Patrice, 74410 Saint-Jorioz (FR)
(74) Mandataire: Poulin, Gérard

(57) **Abrégé**

L'invention concerne un système de détection spectrométrique comprenant un bloc (6) de matériau semi-conducteur, une cathode (7) fixée sur une première face du bloc de matériau semi-conducteur et une anode (8) fixée sur une deuxième face du bloc de matériau semi-conducteur, les première et deuxième faces étant à l'opposé l'une de l'autre.

Le système de détection comprend un substrat (9) fixé sur l'anode (8) et au moins un circuit ASIC (10, 11) implanté dans le substrat, le circuit ASIC (10, 11) comprenant une électronique de traitement d'un signal issu bloc de matériau semi-conducteur.

L'invention s'applique à tout domaine qui met en oeuvre la détection de rayonnements ionisants à l'aide de semi-conducteurs, par exemple l'imagerie médicale.

## Description

### Domaine technique et art antérieur

L'invention concerne un système de détection spectrométrique intégré à semi-conducteur.

L'invention s'applique à la détection de rayonnements ionisants à l'aide de composants semi-conducteurs. Les semi-conducteurs utilisés peuvent être, par exemple, du CdZnTe, du CdTe:Cl ou encore du CdTe:In, GaAs, HgI₂, PbI₂, TlBr.

L'utilisation des semi-conducteurs comme détecteurs de rayonnement présente de nombreux avantages parmi lesquels on peut citer :
- une conversion directe du rayonnement en signal électrique plutôt qu'une conversion indirecte photons gamma/lumière/charges électriques obtenue par l'association d'un scintillateur et d'un photomultiplicateur,
- un fonctionnement à température ambiante qui permet de concevoir des détecteurs légers et compacts,
- des signaux électriques détectés d'amplitudes élevées permettant d'obtenir d'excellentes résolutions en énergie,
- la possibilité d'utiliser des détecteurs épais et de pouvoir disposer ces détecteurs matriciellement pour plus de sensibilité.

Depuis quelques années, la maîtrise du tirage de matériau semi-conducteur associée à la technologie de fabrication des détecteurs spectrométriques a confirmé les ambitions de l'utilisation des semi-conducteurs en spectrométrie de rayonnement. Le champ d'application des détecteurs à base de semi-conducteur s'est grandement élargi : imageurs à deux dimensions (imageurs 2D) en imagerie médicale à base de semi-conducteur CdZnTe, sondes monovoies types sondes préopératoires à base de CdTe:Cl ou CdZnTe, sondes nucléaires pour le contrôle d'assemblages irradiés, instrumentation scientifique, etc..

Selon les domaines d'application, le rayonnement incident est constitué de photons plus ou moins nombreux ayant des énergies très variables (de quelques keV à quelques MeV). Les systèmes de détection doivent éventuellement compter ces photons un par un et/ou mesurer avec la plus grande précision leur énergie.

De façon générale, une chaîne de détection spectrométrique comprend :
- un porte détecteur permettant de maintenir le détecteur à l'obscurité et d'isoler celui-ci des perturbations électromagnétiques,
- un préamplificateur de charge permettant d'intégrer le signal électrique généré par le semi-conducteur,
- une alimentation basse tension du préamplificateur,
- une alimentation haute tension afin d'appliquer un champ électrique au détecteur,
- un amplificateur permettant d'amplifier, filtrer et traiter les signaux électriques issus du préamplificateur,
- une alimentation basse tension de l'amplificateur,
- un convertisseur analogique digital (CAD) permettant de numériser les signaux électriques,
- une alimentation basse tension du convertisseur,
- un analyseur de spectre,
- un afficheur de type PC (PC pour « Personal Computer ») ou compteur.

Les récents développements dans le domaine des détecteurs à semi-conducteur ont consisté à corriger les inconvénients généralement associés à ce type de matériau comme, par exemple, le piégeage des porteurs de charge. Le piégeage des porteurs de charges induit en effet une perte de l'efficacité de détection en rendant le signal électrique mesuré dépendant du lieu d'interaction du photon dans le détecteur. Différentes méthodes de compensation ont été proposées, certaines sont associées à la structure des électrodes, d'autres au traitement électrique des signaux. Dans tous les cas, l'objectif est d'améliorer l'efficacité de détection tout en maintenant une excellente résolution en énergie.

Aujourd'hui, les systèmes d'imagerie gamma de type sondes monovoie ou imageurs 2D utilisant des détecteurs à base de semi-conducteurs sont proposés avec une architecture hybride de la chaîne de détection. Cette architecture hybride éloigne très sensiblement la partie semi-conductrice de la partie électronique de traitement. Une telle architecture présente de nombreux inconvénients. Elle est en effet assez volumineuse, ce qui limite 1a compacité des systèmes imageur 2D et des sondes monovoies et réduit, en conséquence, très sensiblement les domaines d'application de ce type de détecteur. Une telle architecture ne permet en effet pas de réaliser facilement des imageurs 2D dont les détecteurs élémentaires ont des dimensions différentes. Par ailleurs, la liaison entre le détecteur à semi-conducteur et l'électronique de traitement est une source de bruit qui limite les performances du détecteur.

Selon l'art connu, les architectures de détecteurs proposées comprennent une électronique où dominent les composants hybrides. Seuls le préamplificateur, l'amplificateur et, éventuellement, le convertisseur sont proposés sous forme de circuit intégré à application spécifique communément appelés circuits ASIC. Des câbles assurent les liaisons électriques entre les différents éléments qui constituent la chaîne de détection.

De plus, l'intégration du préamplificateur et de l'amplificateur, voire du convertisseur, dans un circuit ASIC n'est pas optimale. En effet, toutes les architectures système existantes proposent un seul circuit ASIC pour gérer plusieurs détecteurs. Le circuit ASIC est alors le plus souvent câblé, collé ou hybridé sur une première face d'un support céramique, une matrice de détecteurs individuels ou un détecteur monolithique comprenant plusieurs voies étant collé sur la deuxième face de ce même support.

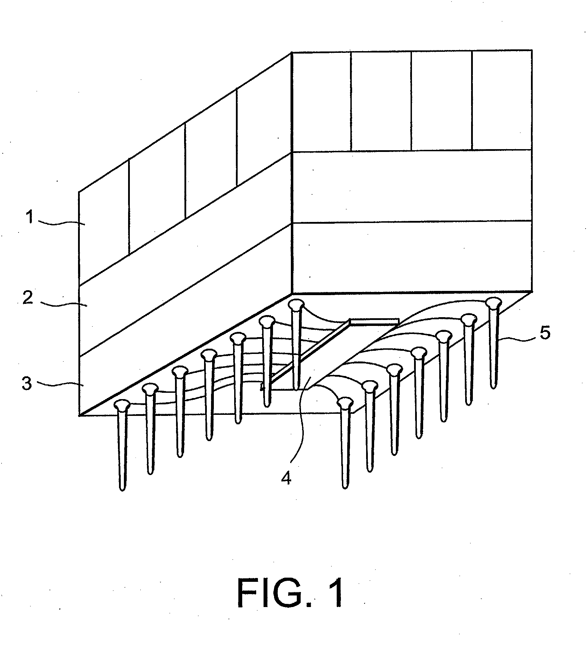

Un exemple de système à architecture hybride de l'art connu est donné en figure 1. Le système comprend un ensemble de détecteurs élémentaires à semi-conducteur 1 montés sur un connecteur 2. Un circuit ASIC 4 monté sur un support 3 est relié au connecteur 2. Un ensemble de broches 5 sont reliées aux entrées/sorties du circuit ASIC 4.

Le circuit ASIC 4 présente de très petites dimensions (typiquement quelques mm²), alors que la matrice de détecteurs élémentaires 1 présente une surface d'électrodes beaucoup plus importante (typiquement quelques dizaines de mm²). Cette grande différence de dimensions conduit à la présence de liaisons électriques importantes entre les sorties des détecteurs élémentaires 1 et les entrées correspondantes des préamplificateurs du circuit ASIC 4. Ces liaisons sont une source de bruit et, partant, de dégradation des performances de détection.

L'invention ne présente pas les inconvénients mentionnés ci-dessus.

### Exposé de l'invention

En effet, l'invention concerne un système de détection spectrométrique comprenant un bloc de matériau semi-conducteur, une cathode fixée sur une . première face du bloc de matériau semi-conducteur et une anode fixée sur une deuxième face du bloc de matériau semi-conducteur, les première et deuxième faces étant à l'opposé l'une de l'autre. Le système de détection spectrométrique comprend un substrat fixé sur l'anode et au moins un circuit ASIC implanté dans le substrat, le circuit ASIC comprenant une électronique de traitement d'un signal issu du bloc de matériau semi-conducteur.

L'invention concerne également une sonde monovoie, caractérisée en ce qu'elle comprend au moins un système de détection spectrométrique selon l'invention

L'invention concerne encore un imageur 2D, caractérisé en ce qu'il comprend une pluralité de systèmes de détection spectrométriques selon l'invention

Le système de détection spectrométrique selon l'invention est ainsi un nouveau système dans lequel la partie semi-conductrice et la partie électronique de traitement sont très proches l'une de l'autre. Au moins un circuit ASIC contenant des circuits électroniques de traitement est placé à proximité de l'anode d'un détecteur élémentaire, par exemple, un détecteur CdZnTe.

La proximité entre partie semi-conductrice et électronique de traitement qui lui est associée permet avantageusement, entre autres :
- de réaliser facilement différentes dimensions d'imageur 2D avec différentes géométries de détecteurs et de pas associés,
- d'optimiser les performances du système en limitant au minimum la liaison électrique entre le détecteur et le préamplificateur,
- de pouvoir optimiser les performances des imageurs 2D en permettant d'associer une chaîne de spectrométrie par détecteur afin d'améliorer le taux de comptage.

Selon un perfectionnement de l'invention, la structure d'électrode peut avantageusement donner lieu à l'effet capacitif communément appelé « effet capacitif de grille de Frish », ce qui permet d'améliorer encore l'efficacité de la détection.

### Brève description des figures

D'autres caractéristiques et avantages de l'invention apparaîtront à la lecture d'un mode de réalisation préférentiel fait en référence aux figures jointes parmi lesquelles :
- la figure 1 représente un système de détection spectrométrique selon l'art connu ;
- la figure 2 représente un exemple de réalisation du système de détection spectrométrique selon l'invention ;
- les figures 3A-3B représentent une première variante de composant pour la détection spectrométrique selon l'invention ;
- les figures 4A-4B représentent une deuxième variante de composant pour la détection spectrométrique selon l'invention ;
- les figures 5A-5B représentent une troisième variante de composant pour la détection spectrométrique selon l'invention ;
- la figure 6 représente un perfectionnement du composant selon la première variante de l'invention ;
- la figure 7 représente une sonde monovoie selon l'invention ;
- la figure 8 représente un imageur 2D selon l'invention.

Sur toutes les figures, les mêmes repères désignent les mêmes éléments.

### Description détaillée de modes de mise en oeuvre de l'invention

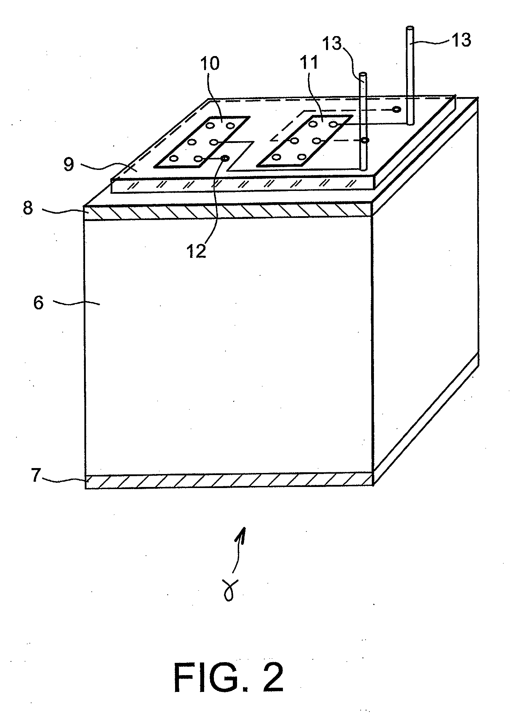

La figure 2 représente un exemple de réalisation du système de détection spectrométrique selon l'invention.

Un bloc de matériau semi-conducteur 6, par exemple un bloc de CdZnTe, est recouvert sur une première face d'une cathode 7 et sur une deuxième face, opposée la première face, d'une anode 8. L'anode 8 est recouverte d'un mince substrat 9 sur lequel sont directement implantés deux circuits ASIC 10 et 11. Le substrat 9 peut être, par exemple, du silicium ou de l'AsGa d'épaisseur de l'ordre de 500 µm. Le circuit ASIC 10 est un préamplificateur et le circuit ASIC 11 est un circuit d'alimentation haute tension pour la polarisation du matériau semi-conducteur. Un rayonnement γ est envoyé sur la cathode 7. Le signal issu du bloc détecteur 6 est recueilli sur un plot 12 qui est relié à l'entrée du circuit ASIC 10. Des broches 13 sont reliées aux entrées/sorties des circuits ASIC 10 et 11.

Il est clair que la liaison entre la partie semi-conductrice et la partie électronique est ici réduite au minimum, ce qui a pour effet de réduire le bruit du système de détection. A titre d'exemple, le bruit peut être réduit de 10 à 50%.

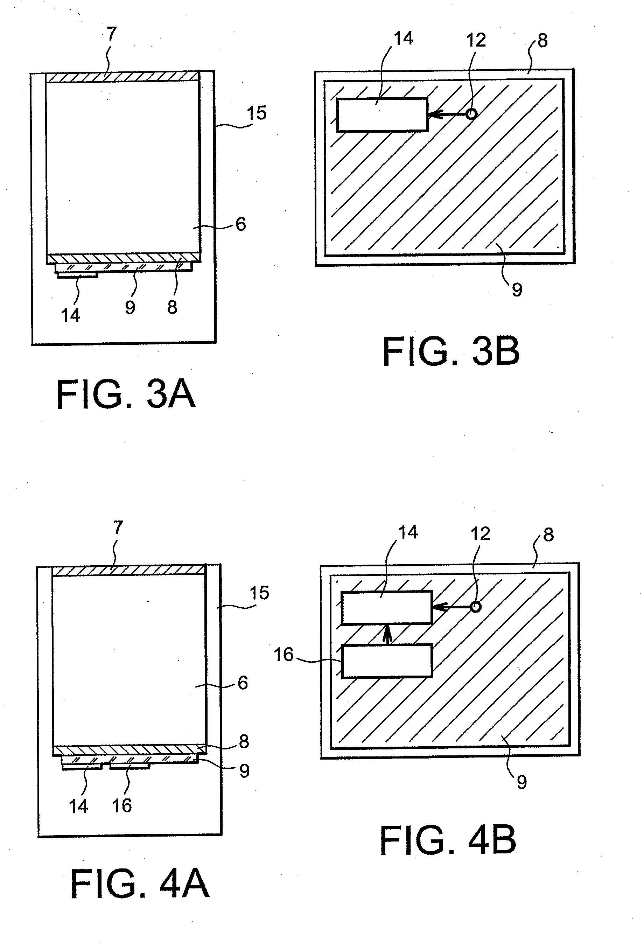

Les figures 3A-3B représentent une première variante de composant pour la détection spectrométrique selon l'invention. La figure 3A représente une vue en coupe du composant et la figure 3B représente une vue de dessus du composant, côté anode. Le composant selon la première variante de l'invention comprend un bloc de matériau semi-conducteur 6, par exemple un bloc de CdZnTe, recouvert sur une première face d'une cathode 7 et sur une deuxième face, opposée à la première face, d'une anode 8. L'anode 8 est recouverte d'un mince substrat 9 dans lequel est implanté un circuit ASIC 14.

Le circuit ASIC 14 est, par exemple, un circuit intégré comprenant un préamplificateur, un amplificateur et un convertisseur analogique/digital. Un plot 12 recueille le signal issu du détecteur 6. Les différents éléments qui constituent le composant sont rassemblés dans un boîtier 15 muni d'une ouverture permettant de laisser la cathode exposée au rayonnement.

L'amplificateur contenu dans le circuit ASIC 14 peut avantageusement comprendre un circuit de traitement électronique permettant d'améliorer l'efficacité de détection tel que le circuit décrit dans le brevet français N°2 738 919 déposé en France le 15 septembre 1995 et intitulé « Procédé et dispositif pour la correction de mesures spectrométriques ».

Les figures 4A-4B représentent une deuxième variante de composant pour la détection spectrométrique selon l'invention. En plus des éléments mentionnés ci-dessus, le composant selon le deuxième exemple de l'invention comprend un deuxième circuit ASIC 16. Le circuit ASIC 16 est un circuit d'alimentation haute tension qui permet d'appliquer un champ électrique dans le matériau semi-conducteur. Le circuit ASIC 16 est réalisé en technologie silicium sur isolant communément appelée technologie SOI (SOI pour « Silicon On Insulator »), ce qui permet de réaliser une alimentation avec des tensions de polarisation de l'ordre de quelques centaines de volts. Le circuit ASIC 16 est implanté dans le substrat 9, par exemple en silicium.

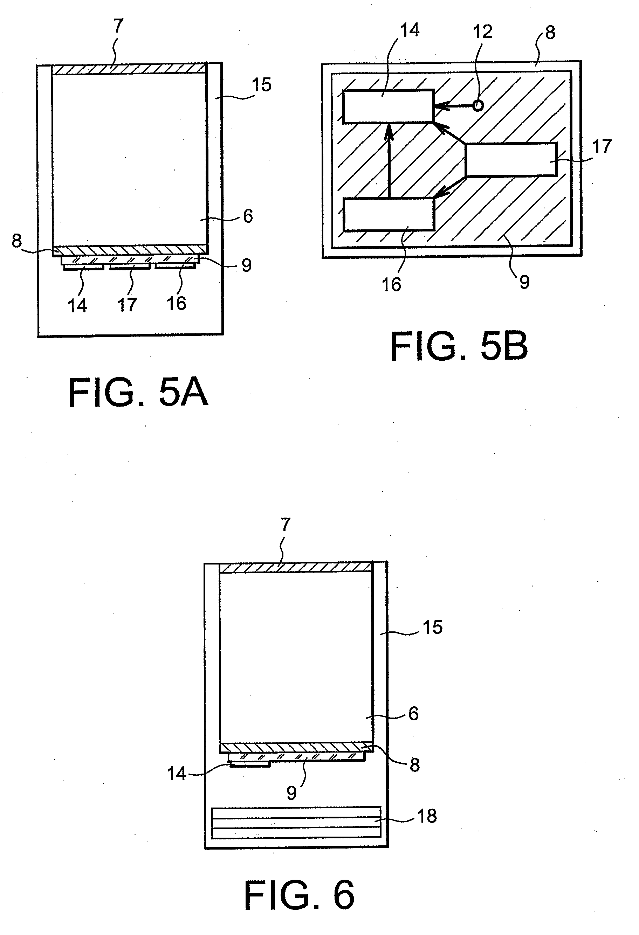

Les figures 5A-5B représentent une troisième variante de composant pour la détection spectrométrique selon l'invention. En plus des éléments mentionnés ci-dessus pour la constitution d'un composant conforme aux figures 4A-4B, le composant selon la troisième variante de l'invention comprend un troisième circuit ASIC 17. Le circuit ASIC 17 permet, par exemple, une transmission électromagnétique des données détectées vers des circuits situés en amont de la chaîne de traitement, par exemple des circuits de réception placés dans un ordinateur personnel. Toute liaison électrique par câble entre le détecteur et l'ordinateur personnel est alors avantageusement supprimée.

La figure 6 représente un perfectionnement de la première variante de composant selon l'invention. En plus des éléments qui constituent le composant selon la première variante, le composant selon le perfectionnement comprend un bloc d'alimentation basse tension 18. Le bloc 18 est constitué de piles à forte capacité afin d'alimenter en 0/+5 volts le circuit ASIC 14. Le bloc 18 est fixé, par exemple par collage, au plus près du circuit ASIC 14. Il est alors placé comme cela est représenté en figure 6, sur la paroi du boîtier qui fait face à l'anode du détecteur.

Le perfectionnement est décrit ci-dessus en référence à la première variante de composant selon l'invention. Il est clair pour l'homme du métier que ce perfectionnement peut également s'appliquer aux composants selon les deuxième et troisième variantes.

De façon générale, le composant selon l'invention comprend un ou plusieurs éléments d'intégration de type circuit ASIC et/ou bloc d'alimentation. Le nombre d'éléments d'intégration dépend alors du niveau d'intégration souhaité. Dans tous les cas, l'intégration du circuit ASIC 14 est primordiale afin d'optimiser les performances du détecteur.

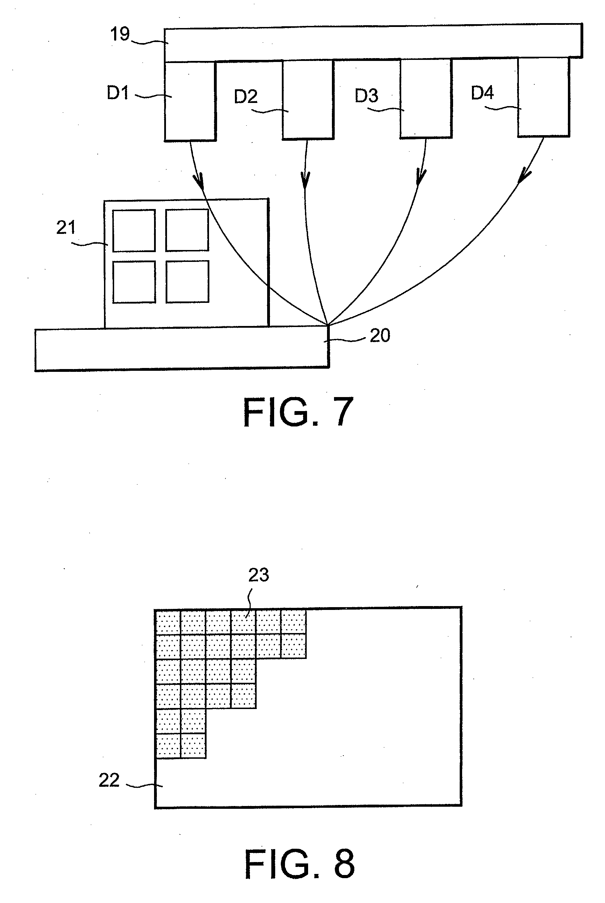

La figure 7 représente une sonde monovoie selon l'invention. Une source de radiations gamma 19 illumine quatre détecteurs selon l'invention D1, D2, D3, D4. Chaque détecteur Di (i=1, 2, 3, 4) est collé au plus proche des sources et comprend un circuit ASIC 18 qui lui permet de transmettre par voie hertzienne les données détectées. Les données transmises sont recueillies par un bloc récepteur 20 et affichées sur un écran 21. La sonde monovoie est avantageusement intégrée dans quelques cm³ sans aucune liaison électrique.

Concernant les imageurs 2D, outre l'augmentation drastique des performances spectrométriques, les différents composants peuvent être connectés sur un simple support électronique à l'aide de broches. Cela permet une souplesse dans la définition du champ de détection des imageurs 2D en optimisant la géométrie des détecteurs et leur pas selon les domaines applications. Un imageur 2D 22 comprenant un ensemble de systèmes de détection élémentaires 23 rassemblés au plus près est représenté en figure 8.

## Revendications

1. Système de détection spectrométrique comprenant un bloc (6) de matériau semi-conducteur, une cathode (7) fixée sur une première face du bloc de matériau semi-conducteur et une anode (8) fixée sur une deuxième face du bloc de matériau semi-conducteur, les première et deuxième faces étant à l'opposé l'une de l'autre, **caractérisé en ce qu'**il comprend un substrat (9) fixé sur l'anode (8) et au moins un circuit ASIC (14) implanté dans le substrat, le circuit ASIC (14) comprenant une électronique de traitement d'un signal issu du bloc de matériau semi-conducteur.

2. Système de détection spectrométrique selon la revendication 1, **caractérisé en ce que** le circuit ASIC (14) comprend un préamplificateur et un amplificateur pour respectivement pré-amplifier et amplifier le signal issu du bloc (6) de matériau semi-conducteur.

3. Système de détection spectrométrique selon la revendication 2, **caractérisé en ce que** le circuit ASIC (14) comprend en outre un convertisseur analogique/digital pour convertir le signal issu de l'amplificateur en données numériques.

4. Système de détection spectrométrique selon la revendication 3, **caractérisé en ce qu'**il comprend en outre, fixé sur le substrat (9), un circuit ASIC (17) pour la transmission électromagnétique des données numériques.

5. Système de détection spectrométrique selon l'une quelconque des revendications 1 à 4, **caractérisé en ce qu'**il comprend en outre un circuit ASIC d'alimentation haute tension (16) implanté dans le substrat (9), pour appliquer un champ électrique dans le matériau semi-conducteur.

6. Système de détection spectrométrique selon la revendication 5, **caractérisé en ce que** le circuit ASIC d'alimentation haute tension (16) est réalisé en technologie SOI.

7. Système de détection spectrométrique selon l'une quelconque des revendications précédentes, **caractérisé en ce qu'**il comprend en outre un bloc d'alimentation basse tension (18).

8. Système de détection spectrométrique selon l'une quelconque des revendications précédentes, **caractérisé en ce qu'**il est intégré dans un boîtier (15).

9. Système de détection spectrométrique selon la revendication 8, **caractérisé en ce que** le bloc d'alimentation basse tension (18) est fixé sur une face du boîtier située à proximité de l'anode (8).

10. Sonde monovoie, **caractérisée en ce qu'**elle comprend au moins un système de détection spectrométrique selon l'une quelconque des revendications 1 à 9.

11. Imageur 2D, **caractérisé en ce qu'**il comprend une pluralité de système de détection spectrométriques selon l'une quelconque des revendications 1 à 9.
